(19) Europäisches Patentamt
European Patent Office
Office européen des brevets

(11) **EP 4 432 488 A1**

(12) **EUROPEAN PATENT APPLICATION**
published in accordance with Art. 153(4) EPC

(43) Date of publication:
**18.09.2024 Bulletin 2024/38**

(21) Application number: **21964062.0**

(22) Date of filing: **11.11.2021**

(51) International Patent Classification (IPC):
***H01S 3/10*** *(2006.01)*

(52) Cooperative Patent Classification (CPC):
**H01S 3/10**

(86) International application number:
**PCT/JP2021/041581**

(87) International publication number:
**WO 2023/084707 (19.05.2023 Gazette 2023/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation
108-8001 Tokyo (JP)**

(72) Inventor: **TAKESHITA, Hitoshi
Tokyo 108-8001 (JP)**

(74) Representative: **Betten & Resch
Patent- und Rechtsanwälte PartGmbB
Maximiliansplatz 14
80333 München (DE)**

(54) **LIGHT AMPLIFICATION DEVICE AND LIGHT AMPLIFICATION METHOD**

(57)   In a multi-core optical fiber transmission system, it is sometimes difficult to connect a multi-core optical transmission path with a multi-core optical amplifier. Thus, a light amplification device of the present invention comprises: a multi-core light amplification means including a plurality of amplification cores; and a connection means for connecting the multi-core light amplification means with a multi-core optical transmission path including a plurality of transmission path cores. A total number of the plurality of amplification cores is greater than or equal to the number of transmission cores among the plurality of transmission path cores through which signal light propagates.

Fig.1

## Description

### Technical Field

The present invention relates to a light amplification device and a light amplification method, and particularly to a light amplification device and a light amplification method that are used in a multi-core optical fiber transmission system.

### Background Art

Due to rapid expansion in mobile traffic and video services and the like, there is a demand for an increase in communication capacity in a core network. This demand for capacity expansion tends to continue in the future. Historically, the expansion of communication capacity has been achieved by using a time-division multiplexing technique and a wavelength-division multiplexing technique. The time-division multiplexing technique and the wavelength-division multiplexing technique have been applied to an optical communication system using a single-core optical fiber.

For further expansion of communication capacity, a spatial multiplexing technique, which is a different category of multiplexing techniques from the conventional multiplexing techniques, has been developed. The spatial multiplexing technique includes a multi-core technique for increasing the number of cores per optical fiber and a multimode technique for increasing the number of propagation modes. The current optical fiber communication uses a single core and a single mode. Therefore, it is possible to significantly expand communication capacity by increasing the number of cores and the number of modes.

As a light amplification method suitable for a multi-core optical fiber used in the multi-core technique, two methods including a core excitation method and a clad excitation method are given. In the core excitation method, intensity of an optical signal being optically transmitted through each core is individually amplified by using a separate excitation light source for each core. In contrast, in the clad excitation method, intensity of an optical signal being optically transmitted through each core is collectively amplified by using a common excitation light source.

For efficient amplification of light intensity of an optical signal transmitted through a multi-core optical fiber, the clad excitation method in which intensity of an optical signal being optically transmitted through each core is collectively amplified by using a common excitation light source is desired. Further, in the clad excitation method, a configuration of an optical amplifier adopting a current single-core excitation method can be theoretically used as it is for a configuration of an optical amplifier adopting the clad excitation method.

One example of an optical amplifier adopting such a clad excitation method is described in PTL 1.

The related-art optical amplifier described in PTL 1 includes a multi-core optical fiber 91, an excitation light source 92, an optical isolator 94, an optical multiplexer 93, and multi-core optical fibers 97#1 and 97#2. Herein, in the multi-core optical fiber 91, a plurality of cores doped with rare-earth ions are arranged in a first clad. Moreover, the multi-core optical fiber 91 includes a second clad that is arranged in a periphery of the first clad and reflects excitation light having a wavelength for exciting the rare-earth ions. Further, the plurality of cores are configured to have an inter-core distance for coupling propagation light.

Further, the related-art techniques include techniques described in PTLs 2 and 3.

### Citation List

### Patent Literature

PTL 1: Japanese Unexamined Patent Application Publication No. 2017-21070
PTL 2: Japanese Unexamined Patent Application Publication No. 2019-139029
PTL 3: Published Japanese Translation of PCT International Publication for Patent Application, No. 2020-513162

### Summary of Invention

### Technical Problem

In a multi-core optical fiber transmission system using a multi-core optical fiber, a multi-core optical amplifier similar to the related-art optical amplifier described above is inserted in the middle of a multi-core optical transmission path. Therefore, it is required that each of cores of the multi-core optical transmission path and each of cores of the multi-core optical amplifier be optically connected to each other. Herein, in the multi-core optical fiber, the number of cores and arrangement of the cores are limited for dense filling of the cores. Thus, the number of cores of the multi-core optical transmission path and the number of cores of the multi-core optical amplifier do not match with each other, which may cause difficulties in connecting the multi-core optical transmission path and the multi-core optical amplifier to each other.

For this reason, in the multi-core optical fiber transmission system, there arises a problem of, specifically, difficulties in connecting the multi-core optical transmission path and the multi-core optical amplifier to each other.

An object of the present invention is to provide a light amplification device and a light amplification method that solve the above-mentioned problem, that is, a problem of difficulties in connecting a multi-core optical transmission path and a multi-core optical amplifier in a multi-core optical fiber transmission system.

## Solution to Problem

A light amplification device according to the present invention includes: a multi-core optical amplification means including a plurality of amplification cores; and a connection means for connecting the multi-core optical amplification means and a multi-core optical transmission path including a plurality of transmission path cores, wherein a total number of the plurality of amplification cores is equal to or greater than the number of transmission cores through which signal light propagates, among the plurality of transmission path cores.

A light amplification method according to the present invention includes: connecting a multi-core optical amplifier including a plurality of amplification cores and a multi-core optical transmission path including a plurality of transmission path cores in such a way that a total number of the plurality of amplification cores is equal to or greater than the number of transmission cores through which signal light propagates, among the plurality of transmission path cores; and amplifying the signal light by the plurality of amplification cores.

## Advantageous Effects of Invention

According to the light amplification device and the light amplification method according to the present invention, a multi-core optical transmission path and a multi-core optical amplifier can be connected to each other even when the number of cores of the multi-core optical transmission path and the number of cores of the multi-core optical amplifier do not match with each other.

## Brief Description of Drawings

[Fig. 1] Fig. 1 is a block diagram illustrating a configuration of a light amplification device according to a first example embodiment of the present invention.
[Fig. 2] Fig. 2 is a flowchart for describing a light amplification method of the first example embodiment of the present invention.
[Fig. 3] Fig. 3 is a block diagram illustrating a configuration of a light amplification device according to a second example embodiment of the present invention.
[Fig. 4] Fig. 4 is a block diagram illustrating another configuration of the light amplification device of the second example embodiment of the present invention.
[Fig. 5] Fig. 5 is a diagram illustrating one example of information relating to a configuration of a multi-core optical amplification unit included in the light amplification device of the second example embodiment of the present invention.
[Fig. 6] Fig. 6 is a flowchart for describing a light amplification method of the second example embodiment of the present invention.
[Fig. 7] Fig. 7 is a block diagram illustrating a configuration of a light amplification device according to a third example embodiment of the present invention.
[Fig. 8] Fig. 8 is a flowchart for describing a light amplification method of the third example embodiment of the present invention.

## Example Embodiment

With reference to the drawings, example embodiments of the present invention are described below.

[First Example Embodiment]

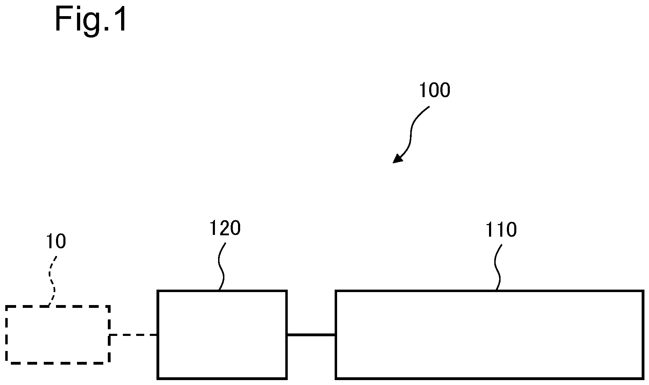

Fig. 1 is a block diagram illustrating a configuration of a light amplification device 100 according to a first example embodiment of the present invention. The light amplification device 100 includes a multi-core optical amplification unit (multi-core optical amplification means) 110 and a connection unit (connection means) 120.

The multi-core optical amplification unit 110 includes a plurality of amplification cores. The connection unit 120 connects the multi-core optical amplification unit 110 and a multi-core optical transmission path 10 including a plurality of transmission path cores to each other. Herein, the total number of the plurality of amplification cores is equal to or greater than the number of transmission cores through which signal light propagates, out of the plurality of transmission path cores.

In this manner, the light amplification device 100 of the present example embodiment is configured to include the multi-core optical amplification unit 110 in which the total number of amplification cores is equal to or greater than the number of transmission cores. Therefore, according to the light amplification device 100 of the present example embodiment, the multi-core optical transmission path and the multi-core optical amplifier can be connected to each other even when the number of cores of the multi-core optical transmission path and the number of cores of the multi-core optical amplifier do not match with each other.

Herein, each of the plurality of amplification cores described above may contain rare-earth ions, and the multi-core optical amplification unit 110 may include a double clad structure. As the multi-core optical amplification unit 110, a multi-core erbium-doped fiber (MC-EDF) using erbium ions as the rare-earth ions may be typically used.

The multi-core optical amplification unit 110 may be configured to include a plurality of multi-core optical amplification units provided with different numbers of the plurality of amplification cores. The degree of freedom of combinations is increased by providing the multi-core optical amplification units provided with the different numbers of cores in a mixed manner, and hence the number of options of connection forms between the multi-core optical transmission path and the multi-core optical amplification unit can be increased.

The connection unit 120 can be configured to connect the multi-core optical amplification unit 110 and the multi-core optical transmission path 10 according to an operation mode of the light amplification device 100. As described above, the degree of freedom in selecting the connection form according to the operation mode can be increased by providing the multi-core optical amplification units provided with the different numbers of cores in a mixed manner.

When the operation mode is a mode for minimizing power consumption, the connection unit 120 connects the multi-core optical amplification unit 110 and the multi-core optical transmission path 10 in a connection form in which a total of excitation light intensity for each of the multi-core optical amplification units 110 is minimized. Herein, the excitation light intensity is determined by a configuration of the multi-core optical amplification unit 110, the configuration including the number of the plurality of amplification cores. Specifically, when a multi-core erbium-doped fiber (MC-EDF) is used as the multi-core optical amplification unit 110, the excitation light intensity depends on a clad diameter and the number of cores, and is determined by a ratio of a total cross-sectional area of the cores with respect to a fiber cross-sectional area.

Further, when the operation mode is a mode for maximizing an optical amplification degree, the connection unit 120 connects the multi-core optical amplification unit 110 and the multi-core optical transmission path 10 in a connection form in which a total of excitation density for each of the multi-core optical amplification units 110 is maximized. Herein, the excitation density is determined by a configuration of the multi-core optical amplification unit 110, the configuration including the number of the plurality of amplification cores. Specifically, when a multi-core erbium-doped fiber (MC-EDF) is used as the multi-core optical amplification unit 110, the excitation density depends on a clad diameter and the number of cores, and is determined by a ratio of a total cross-sectional area of the cores with respect to a fiber cross-sectional area.

In this manner, simplification of the configuration of the multi-core optical amplification unit 110 and cost reduction can be achieved by setting the operation mode, based on requirement specifications that are determined in advance. The operation mode may be set to an operation mode according to the requirement specifications, other than the mode for minimizing power consumption and the mode for maximizing an optical amplification degree that are described above.

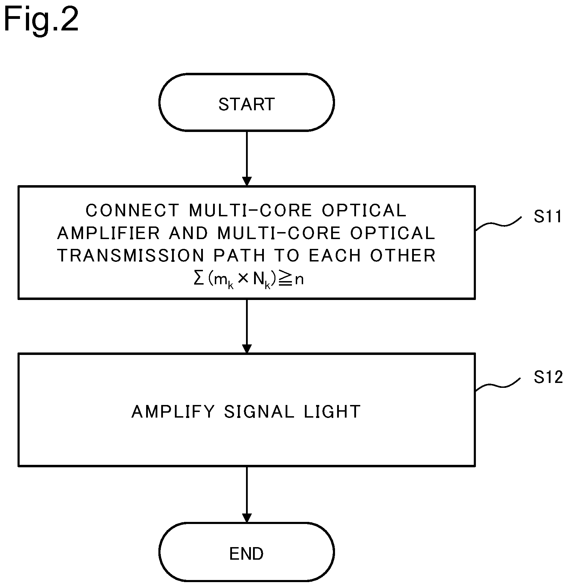

Next, with reference to the flowchart illustrated in Fig. 2, a light amplification method of the present example embodiment is described.

In the light amplification method of the present example embodiment, first, the multi-core optical amplifier including the plurality of amplification cores and the multi-core optical transmission path including the plurality of transmission path cores are connected to each other (step S11). In this state, connection is performed in such a way that the total ($\Sigma$ ($m_k \times N_k$)) of the number $m_k$ of the plurality of amplification cores is equal to or greater than the number n of transmission cores through which the signal light propagates, out of the plurality of transmission path cores. Herein, "$N_k$" indicates the number of multi-core optical amplifiers, and "k" indicates a variable for acquiring the total. Further, the plurality of amplification cores amplify the signal light (step S12).

In this manner, the light amplification method of the present example embodiment is configured to connect the multi-core optical amplifier and the multi-core optical transmission path in such a way that the total number of amplification cores is equal to or greater than the number of transmission cores. Therefore, according to the light amplification method of the present example embodiment, the multi-core optical transmission path and the multi-core optical amplifier can be connected to each other even when the number of cores of the multi-core optical transmission path and the number of cores of the multi-core optical amplifier do not match with each other.

Connecting the multi-core optical amplifier and the multi-core optical transmission path (step S11) may include connecting the multi-core optical amplifier and the multi-core optical transmission path according to the operation mode of the entirety of the multi-core optical amplifier.

When the operation mode is a mode for minimizing power consumption, connecting the multi-core optical amplifier and the multi-core optical transmission path includes connecting the multi-core optical amplifier and the multi-core optical transmission path in a connection form in which a total of excitation light intensity for each multi-core optical amplifier is minimized. Herein, the excitation light intensity is determined by a configuration of the multi-core optical amplifier, the configuration including the number of the plurality of amplification cores.

Further, when the operation mode is a mode for maximizing an optical amplification degree, connecting the multi-core optical amplifier and the multi-core optical transmission path includes in a connection form in which a total of excitation density for each of the multi-core optical amplifiers is maximized. Herein, the excitation density is determined by a configuration of the multi-core optical amplification amplifier, the configuration including the number of the plurality of amplification cores.

As described above, according to the light amplification device 100 and the light amplification method of the present example embodiment, the multi-core optical transmission path and the multi-core optical amplifier can be connected to each other even when the number of cores of the multi-core optical transmission path and the number of cores of the multi-core optical amplifier do not match with each other.

[Second Example Embodiment]

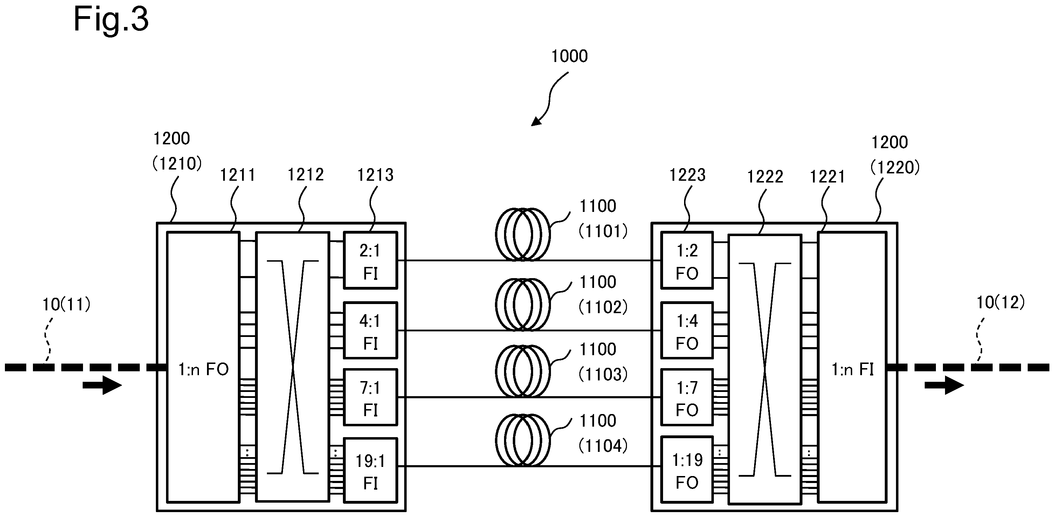

Next, a second example embodiment of the present invention is described. Fig. 3 illustrates a configuration of the light amplification device 1000 of the present example embodiment. The light amplification device 1000 includes a multi-core optical amplification unit (multi-core optical amplification means) 1100 and a connection unit (connection means) 1200.

The multi-core optical amplification unit 1100 includes a plurality of amplification cores. Each of the plurality of amplification cores may contain rare-earth ions, and the multi-core optical amplification unit 1100 may include a double clad structure. As the multi-core optical amplification unit 1110, a multi-core erbium-doped fiber (MC-EDF) using erbium ions as the rare-earth ions may be typically used. The multi-core optical amplification unit 1100 may be configured to include a plurality of multi-core optical amplification units provided with different numbers of the plurality of amplification cores. As an example, Fig. 3 illustrates a configuration in which four multi-core optical amplification units 1101 to 1104 are provided. Herein, with regard to the number of amplification cores, the multi-core optical amplification unit 1101 is provided with two amplification cores, the multi-core optical amplification unit 1102 is provided with four amplification cores, the multi-core optical amplification unit 1103 is provided with seven amplification cores, and the multi-core optical amplification unit 1104 is provided with nineteen amplification cores, for example.

The connection unit 1200 connects the multi-core optical amplification unit 1100 and the multi-core optical transmission path 10 including the plurality of transmission path cores to each other. As an example, Fig. 3 illustrates a configuration including a first connection unit 1210 that connects a multi-core optical transmission path 11 on an input side and the multi-core optical amplification unit 1100 and a second connection unit 1220 that connects a multi-core optical transmission path 12 on an output side and the multi-core optical amplification unit 1100 to each other.

Herein, the total number of the plurality of amplification cores is equal to or greater than the number of transmission cores through which signal light propagates, out of the plurality of transmission path cores. Therefore, according to the light amplification device 1000 of the present example embodiment, the multi-core optical transmission path and the multi-core optical amplifier can be connected to each other even when the number of cores of the multi-core optical transmission path and the number of cores of the multi-core optical amplifier do not match with each other.

Specifically, for example, in the example described above, there may be adopted a configuration in which the total number of amplification cores are 32 (= 2 + 4 + 7 + 19) and the signal light propagates through fourteen transmission cores in the multi-core optical transmission path 10 including forty transmission path cores.

The connection unit 1200 can be configured to connect the multi-core optical amplification unit 1100 and the multi-core optical transmission path 10 according to an operation mode of the light amplification device 1000. Further, in the light amplification device 1000 of the present example embodiment, the connection unit 1200 is configured to switch the connection between the plurality of amplification cores and the plurality of transmission path cores according to the operation mode. In other words, there is adopted a configuration of performing switching control in such a way that any one of the transmission path cores of the multi-core optical transmission path 10 is connected to any one of the multi-core optical amplification units 1101 to 1104.

Specifically, as illustrated in Fig. 3, the first connection unit 1210 and the second connection unit 1220 include first fan-in/fan-out units (first fan-in/fan-out means) 1211 and 1221, optical switching units (optical switching means) 1212 and 1222, and second fan-in/fan-out units (second fan-in/fan-out means) 1213 and 1223, respectively. The first fan-in/fan-out units 1211 and 1221 connect the plurality of transmission path cores and a first single-core optical transmission path to each other. The optical switching units 1212 and 1222 switch connection between the first single-core optical transmission path and a second single-core optical transmission path. Further, the second fan-in/fan-out units 1213 and 1223 connect the second single-core optical transmission path and the plurality of amplification cores to each other.

As the optical switching units 1212 and 1222, an optical switch may be typically used. For example, as the first fan-in/fan-out unit 1211, a fan-out (1:n FO) that couples "n" transmission cores of one multi-core optical transmission path 11 on the input side to "n" first single-core optical transmission paths may be used. Further, for example, as the second fan-in/fan-out unit 1213, a fan-in (2:1 FI) that couples two second single-core optical transmission paths to two amplification cores of one multi-core optical amplification unit 1101 may be used.

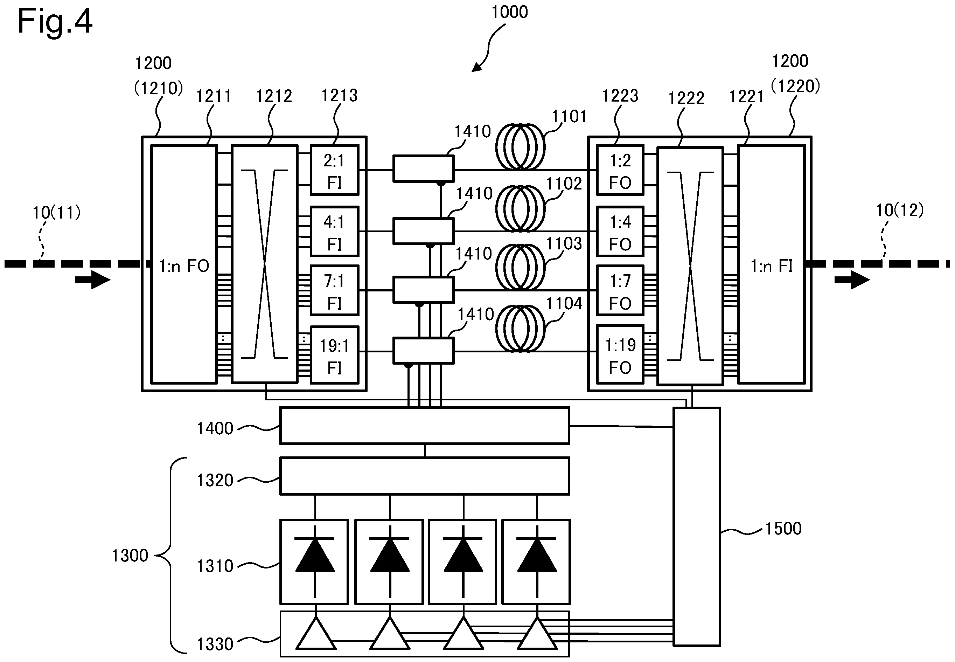

As illustrated in Fig. 4, the light amplification device 1000 may be configured to include an excitation light generation unit (excitation light generation means) 1300, a variable splitting unit (variable splitting means) 1400, and a control unit 1500 including the excitation light control unit (excitation light control means). Fig. 4 also illustrates a combiner 1410 that couples the excitation light to the multi-core optical fiber.

An excitation light introduction means is configured by the excitation light generation unit 1300, the variable splitting unit 1400, and the excitation light control means, and the excitation light for exciting the plurality of amplification cores is introduced to the multi-core optical amplification unit 1100 by the clad excitation method. The number of the excitation light generation unit 1300 can be one regardless of the number of amplification cores by using the clad excitation method, and hence the light amplification device 1000 can be reduced in size.

The excitation light generation unit 1300 generates the excitation light. Herein, the excitation light generation unit 1300 may be configured to include a plurality of light sources 1310 that generate laser light and a multiplexing unit (multiplexing means) 1320 that multiplexes the laser light generated by the plurality of light sources and transmits the excitation light. In this manner, in a case in which the plurality of light sources 1310 are provided, even when any of the light sources malfunction, the excitation light can be generated. As the light source 1310, a semiconductor laser may be typically used. Fig. 4 also illustrates a driver 1330 for driving the light source 1310.

The variable splitting unit 1400 splits the excitation light, and supplies the excitation light being split to the multi-core optical amplification unit 1100. For example, a variable coupler may be used as the variable splitting unit 1400.

The excitation light control unit of the control unit 1500 determines a splitting ratio of the variable splitting unit 1400 according to the operation mode, and sets the splitting ratio being determined to the variable splitting unit 1400. With this, the excitation light can be supplied only to the multi-core optical amplification units 1101 to 1104 that are required to be in an operation state according to the operation mode.

The control unit 1500 may be configured to include a connection form determination unit (connection form determination means). The connection form determination unit determines a connection form between the multi-core optical transmission path 10 and the multi-core optical amplification unit 1100 according to the operation mode by using the number of transmission cores and information relating to the configuration of the multi-core optical amplification unit 1100. Further, the control unit 1500 controls the optical switching units 1212 and 1222 in such a way as to achieve the connection form being determined.

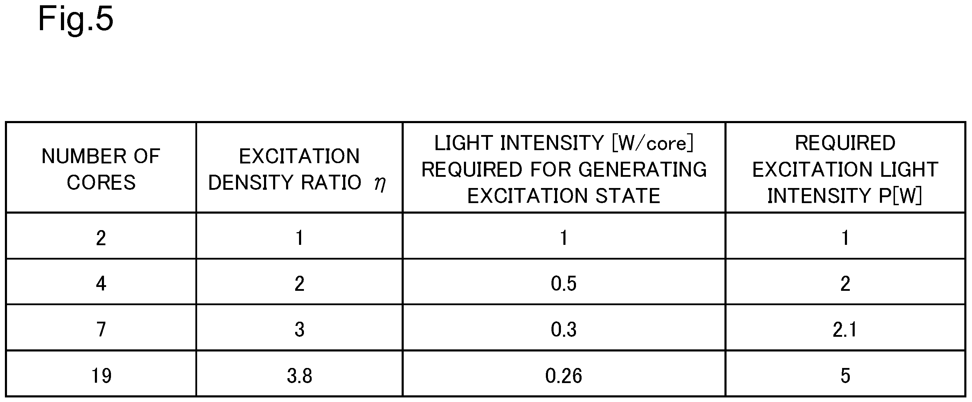

Fig. 5 illustrates one example of the above-mentioned information relating to the configuration of the multi-core optical amplification unit 1100. Fig. 5 illustrates, as the information (parameters) relating to the configuration of the multi-core optical amplification unit 1100, an excitation density ratio $\eta$ per core of the multi-core optical amplification unit 1100, light intensity [W/core] required for generating an excitation state, and required excitation light intensity P[W].

The excitation density ratio $\eta$ indicates a value per core when the excitation density of the multi-core optical amplification unit 1100 including two cores is 1 [W/$\mu$m$^2$]. The excitation density is proportional to the optical amplification efficiency of the multi-core optical amplification unit 1100, and hence affects an optical amplification degree and maximum output light intensity that can be achieved.

The light intensity required for generating an excitation state indicates a value per core when light intensity per core of the multi-core optical amplification unit 1100 including two cores is 1 [W/core]. Further, the required excitation light intensity P[W] is light intensity required for the entirety of the multi-core optical amplification unit 1100. Therefore, the required excitation light intensity P is proportional to power consumption of the multi-core optical amplification unit 1100.

The clad area per core decreases as the number of cores increases, and hence the excitation density per core increases as illustrated in Fig. 5. Based on the fact that the excitation density per core increases as the number of cores increases, the required light intensity per core decreases as the number of cores increases. Further, the required excitation light intensity P is a value acquired by multiplying the light intensity per core, which is required for generating an excitation state, by the number of cores.

Next, an example of an operation of the connection form determination unit is described.

First, description is made on an operation of the connection form determination unit when the operation mode of the light amplification device 1000 is a mode for minimizing power consumption. In this case, the connection form determination unit determines the connection form between the multi-core optical transmission path 10 and the multi-core optical amplification unit 1100, based on the information relating to the configuration of the multi-core optical amplification unit 1100 and the following conditions (1) to (3).

$$\min[\Sigma(N_k \times P_k)] \qquad (1)$$

$$\Sigma(m_k \times N_k) \geq n \qquad (2)$$

$$N_k, \, m_k, \, \text{and } n \text{ are integers equal to or greater than } 0 \qquad (3)$$

Herein, "$P_k$" indicates required excitation light intensity, "$N_k$" indicates the number of the multi-core optical amplification units 1100, "$m_k$" indicates the number of amplification cores, and "n" indicates the number of transmission cores. "k" is a variable for acquiring the total ($\Sigma$).

In this state, the connection form determination unit determines the number "$N_k$" of the multi-core optical amplification units 1100 including the number "$m_k$" of amplification cores in such a way as to satisfy the conditions (1) to (3). The conditions (1) to (3) involve acquisition of a value that minimizes a linear expression among variable values satisfying both a linear inequality and a linear equality. Therefore, the conditions (1) to (3) can be solved by using a well-known method of linear programming.

In the following description, as a specific example, description is made on an example in which the number of transmission cores is n = 14 and the number $m_k$ of amplification cores of the multi-core optical amplification units 1101 to 1104 is $m_1 = 7$, $m_2 = 7$, $m_3 = 7$, and $m_4 = 19$, respectively. In this case, based on Fig. 5, the required excitation light intensity $P_k$[W] required for exciting the multi-core optical amplification units 1101 to 1104 is $P_1 = 2.1$, $P_2 = 2.1$, $P_3 = 2.1$, and $P_4 = 5$, respectively.

In this state, as the number $N_k$ of the multi-core optical amplification units 1100 that satisfies the condition (2) $\Sigma (m_k \times N_k) \geq n$, $N_k$ for minimizing $\Sigma (N_k \times P_k)$ may be acquired based on the condition (1). When the above-mentioned value is substituted in the condition (2), the condition (2) is expressed as follows.

$$7 \times N_1 + 7 \times N_2 + 7 \times N_3 + 19 \times N_4 \geq 14 \qquad (2\text{-}1)$$

Further, $\Sigma (N_k \times P_k)$ in the condition (1) is expressed as follows.

$$2.1 \times N_1 + 2.1 \times N_2 \times N_3 + 5 \times N_4 = 2.1 \times (N_1 + N_2 + N_3) + 5 \times N_4 \qquad (1\text{-}1)$$

In a case of the mode for minimizing power consumption, a core for an input may be selected in the order from the smallest required excitation light intensity $P_k$, and hence, first, the expression (2-1) is $7 \times (Ni + N_2 + N_3) \geq 14$, in other words, $N_1 + N_2 + N_3 \geq 2$ when $N_4 = 0$. Therefore, based on the expression (1-1), it is only required to search for a combination of $N_1$ to $N_3$ that minimize $2.1 \times (Ni + N_2 + N_3)$, from the combinations of $N_1$ to $N_3$ that satisfy $N_1 + N_2 + N_3 \geq 2$.

Herein, $N_1$ to $N_3$ indicate the number of the multi-core optical amplification units 1101 to 1103 each including seven amplification cores. Therefore, in a case in which $N_1 = N_2 = 1$ and $N_3 = 0$ are given, or in a case in which $N_1 = 0$ and $N_2 = N_3 = 1$ are given, two multi-core optical amplification units including seven amplification cores are still required. In this case, the value of the expression (1-1) is $2.1 \times 2 = 4.2$.

Meanwhile, when $N_4 = 1$ is given, it is apparent that $N_1 = N_2 = N_3 = 0$ is satisfied based on the expression (2-1). In this case, the value of the expression (1-1) is $5 \times 1 = 5$.

Therefore, it can be understood that connection of 14 transmission cores to two multi-core optical amplification units each including seven cores achieves lower power consumption as compared to connection to one multi-core optical amplification unit including 19 cores. In this case, the minimum power consumption is 4.2 [W].

Next, description is made on an operation of the connection form determination unit when the operation mode of the light amplification device 1000 is in the mode for maximizing an optical amplification degree. In this case, the connection form determination unit determines the connection form between the multi-core optical transmission path 10 and the multi-core optical amplification unit 1100, based on the information relating to the configuration of the multi-core optical amplification unit 1100 and the following conditions (4) to (7).

$$\max[\Sigma(N_k \times \eta_k)]/\Sigma N_k \qquad\qquad (4)$$

$$\min[\Sigma(m_k \times N_k) - n] \qquad\qquad (5)$$

$$\Sigma(m_k \times N_k) - n \geq 0 \qquad\qquad (6)$$

$$N_k,\ m_k,\ \text{and n are integers equal to or greater than 0} \qquad (7)$$

In this state, the connection form determination unit determines the number "$N_k$" of the multi-core optical amplification units 1100 including the number "$m_k$" of amplification cores in such a way as to satisfy the conditions (4) to (7). The conditions (4) to (7) involve acquisition of a value that minimizes a linear expression among variable values satisfying both a linear inequality and a linear equality. Therefore, the conditions (4) to (7) can be solved by using a well-known method of linear programming.

In the following description, similarly to the above-mentioned case of the mode for minimizing power consumption, description is made on a case in which the number of transmission cores n = 14 is satisfied and the number $m_k$ of amplification cores of the multi-core optical amplification units 1101 to 1104 is $m_1 = 7$, $m_2 = 7$, $m_3 = 7$, and $m_4 = 19$, respectively. In this case, based on Fig. 5, an excitation density ratio $\eta_k$ per core of the multi-core optical amplification units 1101 to 1104 is $\eta_1 = 3$, $\eta_2 = 3$, $\eta_3 = 3$, and $\eta_4 = 3.8$, respectively.

In this state, as the number $N_k$ of the multi-core optical amplification units 1100 that satisfies the condition (6) $\Sigma(m_k \times N_k) - n \geq 0$, $N_k$ that maximizes $\Sigma(N_k \times \eta_k)]/\Sigma N_k$ may be acquired based on the condition (4). When the above-mentioned value is substituted in the condition (6), the condition (6) is expressed as follows.

$$7 \times N_1 + 7 \times N_2 + 7 \times N_3 + 19 \times N_4 - 14 \geq 0 \qquad\qquad (6\text{-}1)$$

Further, $\Sigma(N_k \times \eta_k)]/\Sigma N_k$ of the condition (4) is expressed as follows.

$$(3 \times N_1 + 3 \times N_2 + 3 \times N_3 + 3.8 \times N_4) / (N_1 + N_2 N_3 + N_4) = (3 \times (N_1 + N_2 + N_3 + N_4) + 0.8 \times N_4)$$
$$/ (N_1 + N_2 + N_3 + N_4) \qquad\qquad (4\text{-}1)$$

In a case of the mode for maximizing an optical amplification degree, a core for an input may be selected in the order from the greatest excitation density ratio $\eta_k$, and hence $N_4 = 1$ is first given.

In this case, it is only required to search for a combination of $N_1$ to $N_3$ that minimize the expression (6-2), based on the expression (6-1) and the condition (5), and maximize the expression (4-2), based on the expression (4-1).

$$7 \times (N_1 + N_2 + N_3) + 5 \qquad\qquad (6\text{-}2)$$

$$3 + 0.8 / (N_1 + N_2 + N_3 + 1) \qquad\qquad (4\text{-}2)$$

It is apparent that $N_1$ to $N_3$ that minimize the expression (6-2) satisfy $N_1 = N_2 = N_3 = 0$. In this case, the value of the expression (4-2) is 3 + 0.8 = 3.8.

Meanwhile, when $N_4 = 0$ is given, it is only required to search for such a combination of $N_1$ to $N_3$ that the value satisfying $7 \times (N_i + N_2 + N_3) - 14$ is equal to or greater than 0 and is minimized based on the conditions (5) and (6). In this case, it can be understood that any one of $N_1$ to $N_3$ may be 0 and the others may be 1. In this case, the value of the condition (4) is $(1 \times 3 + 1 \times 3) / (1 + 1) = 3$

Therefore, it can be understood that connection of all 14 transmission cores to one multi-core optical amplification unit including 19 cores achieves a higher optical amplification degree as compared to connection to two multi-core optical amplification units each including seven cores. In this case, a maximum optical amplification degree is 3.8.

In this manner, the connection form determination unit is capable of determining the connection form between the multi-core optical transmission path 10 and the multi-core optical amplification unit 1100 according to the operation mode by using the number of transmission cores and the information relating to the configuration of the multi-core optical amplification unit 1100. In this case, for example, a network management system (NMS) is capable of specifying the operation mode for the light amplification device 1000, and the light amplification device 1000 is capable of operating in the operation mode in response to the request from the network management system (NMS).

In place of the above-mentioned configuration, the network management system (NMS) may determine the connection form between the multi-core optical transmission path 10 and the multi-core optical amplification unit 1100 by using the number of transmission cores and the information relating to the configuration of the multi-core optical amplification unit 1100. In other words, the network management system (NMS) may be configured to acquire the solutions satisfying the conditions (1) to (3) or the conditions (4) to (7), which are described above, by linear programming. In this case, the light amplification device 1000 may be configured to include a connection form reception unit (connection form reception means) that receives information relating to the connection form according to the operation mode.

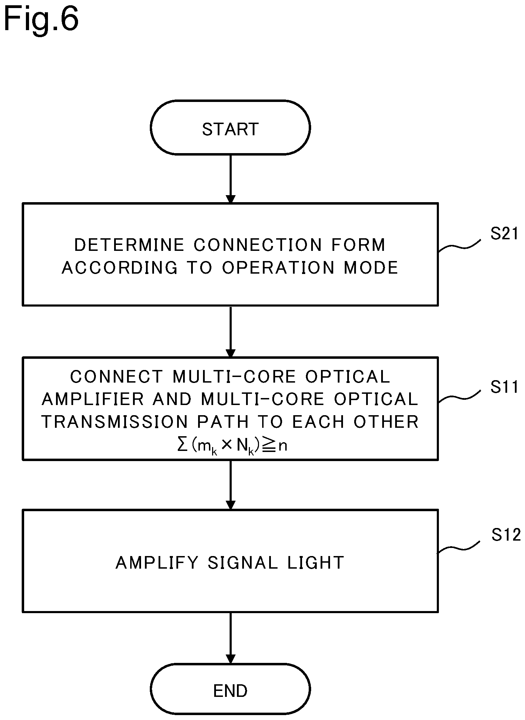

Next, with reference to the flowchart illustrated in Fig. 6, a light amplification method of the present example embodiment is described.

In the light amplification method of the present example embodiment, the multi-core optical amplifier including the plurality of amplification cores and the multi-core optical transmission path including the plurality of transmission path cores are connected to each other (step S11). In this state, connection is performed in such a way that the total ($\Sigma (m_k \times N_k)$) of the number $m_k$ of the plurality of amplification cores is equal to or greater than the number n of transmission cores through which the signal light propagates, out of the plurality of transmission path cores. Further, the plurality of amplification cores amplify the signal light (step S12).

In this manner, the light amplification method of the present example embodiment is configured to connect the multi-core optical amplifier and the multi-core optical transmission path in such a way that the total number of amplification cores is equal to or greater than the number of transmission cores. Therefore, according to the light amplification method of the present example embodiment, the multi-core optical transmission path and the multi-core optical amplifier can be connected to each other even when the number of cores of the multi-core optical transmission path and the number of cores of the multi-core optical amplifier do not match with each other.

Herein, connecting the multi-core optical amplifier and the multi-core optical transmission path (step S11) may include switching the connection between the plurality of amplification cores and the plurality of transmission path cores according to the operation mode.

In this case, in the light amplification method of the present example embodiment, the connection form according to the operation mode is determined by using the number of transmission cores and the information relating to the configuration of the multi-core optical amplifier (step S21).

Further, amplifying the signal light (step S12) described above may include generating the excitation light for exciting the plurality of amplification cores, splitting the excitation light at the splitting ratio according to the operation mode, and introducing the excitation light being split into the multi-core optical amplifier by the clad excitation method.

As described above, according to the light amplification device 1000 and the light amplification method of the present example embodiment, the multi-core optical transmission path and the multi-core optical amplifier can be connected to each other even when the number of cores of the multi-core optical transmission path and the number of cores of the multi-core optical amplifier do not match with each other.

[Third Example Embodiment]

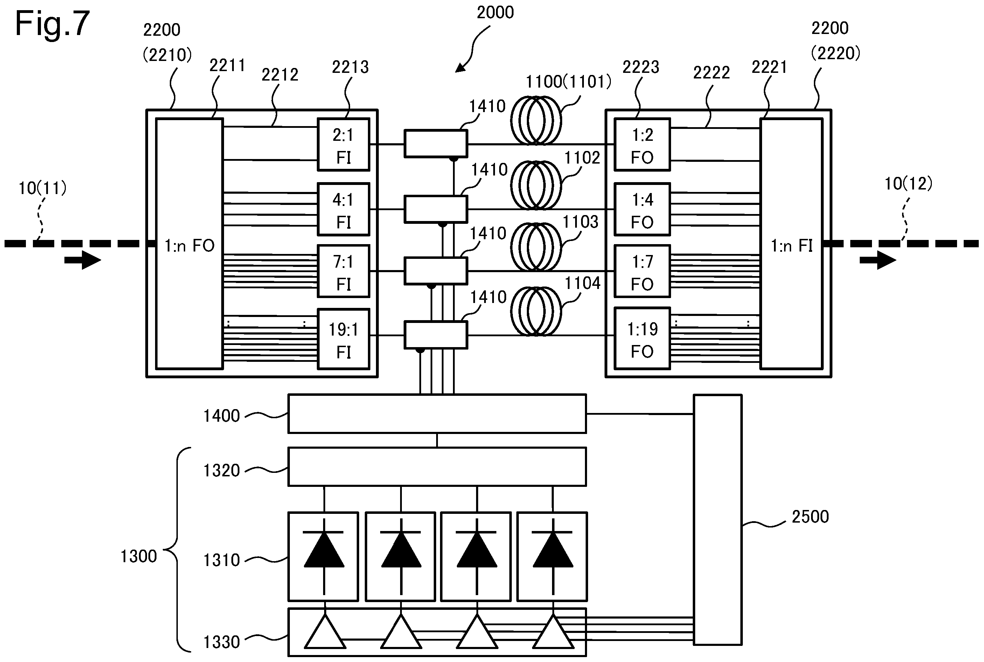

Next, a third example embodiment of the present invention is described. Fig. 7 illustrates a configuration of a light amplification device 2000 of the present example embodiment. The configurations similar to the light amplification device 1000 of the first example embodiment are denoted with the same reference symbols, and detailed description thereof may be omitted.

The light amplification device 2000 includes a multi-core optical amplification unit (multi-core optical amplification means) 1100 and a connection unit (connection means) 2200.

The multi-core optical amplification unit 1100 includes a plurality of amplification cores. Further, the multi-core optical amplification unit 1100 may be configured to include a plurality of multi-core optical amplification units provided with different numbers of the plurality of amplification cores. As an example, Fig. 7 illustrates a configuration in which the four multi-core optical amplification units 1101 to 1104 are provided.

The connection unit 2200 connects the multi-core optical amplification unit 1100 and the multi-core optical transmission path 10 including the plurality of transmission path cores to each other. As an example, Fig. 7 illustrates a configuration including a first connection unit 2210 that connects the multi-core optical transmission path 11 on the input side and the multi-core optical amplification unit 1100 and a second connection unit 2220 that connects the multi-core optical transmission path 12 on the output side and the multi-core optical amplification unit 1100 to each other.

Herein, the total number of the plurality of amplification cores is equal to or greater than the number of transmission cores through which signal light propagates, out of the plurality of transmission path cores. Therefore, according to the light amplification device 2000 of the present example embodiment, the multi-core optical transmission path and the multi-core optical amplifier can be connected to each other even when the number of cores of the multi-core optical transmission path and the number of cores of the multi-core optical amplifier do not match with each other.

The connection unit 2200 can be configured to connect the multi-core optical amplification unit 1100 and the multi-core optical transmission path 10 according to an operation mode of the light amplification device 2000. Further, in the light amplification device 2000 of the present example embodiment, the connection unit 2200 is configured to connect the plurality of amplification cores of the multi-core optical amplification unit 1100 selected according to the operation mode and the plurality of transmission path cores to each other.

The first connection unit 1210 and the second connection unit 1220 may be configured to include third fan-in/fan-out units (third fan-in/fan-out means) 2211 and 2221 and second fan-in/fan-out units (second fan-in/fan-out means) 2213 and 2223, respectively. The third fan-in/fan-out units 2211 and 2221 connect the plurality of transmission path cores and single-core optical transmission paths 2212 and 2222 to each other. The fourth fan-in/fan-out units 2213 and 2223 connect the single-core optical transmission paths 2212 and 2222 and the plurality of amplification cores to each other.

Herein, in the present example embodiment, description is made on a case in which the number of transmission cores of the multi-core optical transmission path 10 is fixed and the operation mode of the light amplification device 2000 is determined in advance. In this case, by using the information (parameters) relating to the configuration of the multi-core optical amplification unit 1100, which is illustrated in Fig. 5, the configuration of the multi-core optical amplification unit 1100 to be included in the light amplification device 2000 can be calculated by linear programming as described in the second example embodiment. Herein, the configuration of the multi-core optical amplification unit 1100 is the number of the multi-core optical amplification units 1100 for each number of amplification cores.

In other words, the light amplification device 2000 of the present example embodiment is configured to include the number of the multi-core optical amplification units 1100 required for each number of amplification cores, which is selected according to the operation mode determined in advance. Therefore, it is only required to provide the minimum required number of the multi-core optical amplification units 1100, and it is not required to include the optical switching unit (optical switch) in the connection unit 2200. Moreover, the control unit 2500 of the light amplification device 2000 does not require the connection form determination unit included in the control unit 1500 of the light amplification device 1000 of the second example embodiment. As a result, according to the light amplification device 2000 of the present example embodiment, a manufacturing cost can be significantly reduced.

In this manner, according to the light amplification device 2000 of the present example embodiment, an application-specific light amplification device with reduced manufacturing cost can be acquired. Specifically, for example, the light amplification device 2000 can be used in a submarine optical repeater that includes the fixed number of input/output transmission cores and is operated in the mode for minimizing power consumption.

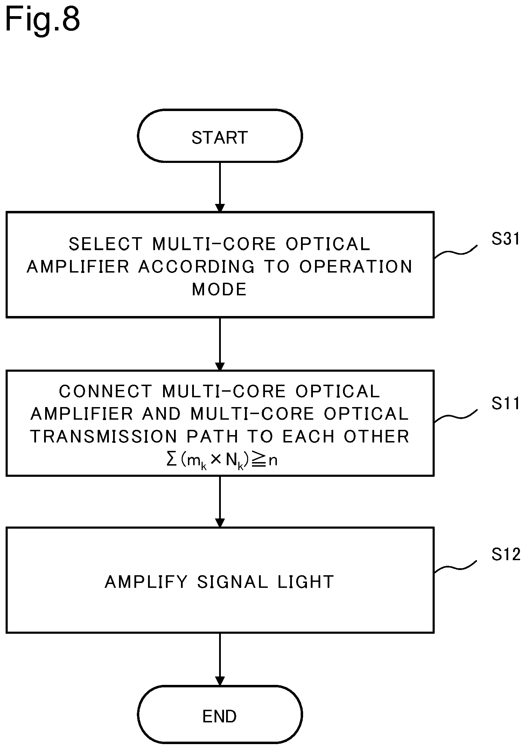

Next, with reference to the flowchart illustrated in Fig. 8, a light amplification method of the present example embodiment is described.

In the light amplification method of the present example embodiment, the multi-core optical amplifier including the plurality of amplification cores and the multi-core optical transmission path including the plurality of transmission path cores are connected to each other (step S11). In this state, connection is performed in such a way that the total ($\Sigma$ ($m_k \times N_k$)) of the number $m_k$ of the plurality of amplification cores is equal to or greater than the number n of transmission cores through which the signal light propagates, out of the plurality of transmission path cores. Further, the plurality of amplification cores amplify the signal light (step S12).

In this manner, the light amplification method of the present example embodiment is configured to connect the multi-core optical amplifier and the multi-core optical transmission path in such a way that the total number of amplification cores is equal to or greater than the number of transmission cores. Therefore, according to the light amplification method of the present example embodiment, the multi-core optical transmission path and the multi-core optical amplifier can be connected to each other even when the number of cores of the multi-core optical transmission path and the number of cores of the multi-core optical amplifier do not match with each other.

Herein, connecting the multi-core optical amplifier and the multi-core optical transmission path (step S11) may include connecting the multi-core optical amplifier and the multi-core optical transmission path according to the operation mode of the entirety of the multi-core optical amplifier.

In this case, in the light amplification method of the present example embodiment, the multi-core optical amplifier according to the operation mode is selected by using the number of transmission cores and the information relating to the configuration of the multi-core optical amplifier (step S31). In this state, connecting the multi-core optical amplifier and the multi-core optical transmission path (step S11) may include connecting the plurality of amplification cores of the multi-core optical amplifier selected according to the operation mode and the plurality of transmission path cores to each other.

As described above, according to the light amplification device 2000 and the light amplification method of the present example embodiment, the multi-core optical transmission path and the multi-core optical amplifier can be connected to each other even when the number of cores of the multi-core optical transmission path and the number of cores of the multi-core optical amplifier do not match with each other. Moreover, a manufacturing cost of the light amplification device can be significantly reduced.

The whole or a part of the example embodiments described above can be described as, but not limited to, the following supplementary notes.

(Supplementary note 1) A light amplification device including: a multi-core optical amplification means including a plurality of amplification cores; and a connection means for connecting the multi-core optical amplification means and a multi-core optical transmission path including a plurality of transmission path cores, wherein a total number of the plurality of amplification cores is equal to or greater than the number of transmission cores through which signal light propagates, among the plurality of transmission path cores.

(Supplementary note 2) The light amplification device according to supplementary note 1, wherein the multi-core optical amplification means includes a plurality of the multi-core optical amplification means provided with different numbers of the plurality of amplification cores.

(Supplementary note 3) The light amplification device according to supplementary note 1 or 2, wherein the connection means connects the multi-core optical amplification means and the multi-core optical transmission path according to an operation mode of the light amplification device.

(Supplementary note 4) The light amplification device according to supplementary note 3, wherein, when the operation mode is a mode for minimizing power consumption, the connection means connects the multi-core optical amplification means and the multi-core optical transmission path in a connection form in which a total of excitation light intensity for each of the multi-core optical amplification means is minimized.

(Supplementary note 5) The light amplification device according to supplementary note 4, wherein the excitation light intensity is determined by a configuration of the multi-core optical amplification means, the configuration including the number of the plurality of amplification cores.

(Supplementary note 6) The light amplification device according to supplementary note 3, wherein, when the operation mode is a mode for maximizing an optical amplification degree, the connection means connects the multi-core optical amplification means and the multi-core optical transmission path in a connection form in which a total of excitation density for each of the multi-core optical amplification means is maximized.

(Supplementary note 7) The light amplification device according to supplementary note 6, wherein the excitation density is determined by a configuration of the multi-core optical amplification means, the configuration including the number of the plurality of amplification cores.

(Supplementary note 8) The light amplification device according to any one of supplementary notes 3 to 7, wherein the connection means switches connection between the plurality of amplification cores and the plurality of transmission path cores according to the operation mode.

(Supplementary note 9) The light amplification device according to supplementary note 8, wherein the connection means includes: a first fan-in/fan-out means for connecting the plurality of transmission path cores and a first single-core optical transmission path; an optical switching means for switching connection between the first single-core optical transmission path and a second single-core optical transmission path; and a second fan-in/fan-out means for connecting the second single-core optical transmission path and the plurality of amplification cores.

(Supplementary note 10) The light amplification device according to any one of supplementary notes 4 to 9, further including: a connection form determination means for determining the connection form according to the operation mode, by using the number of the transmission cores and information relating to a configuration of the multi-core optical amplification means.

(Supplementary note 11) The light amplification device according to any one of supplementary notes 4 to 9, further including: a connection form reception means for receiving information relating to the connection form according to the operation mode.

(Supplementary note 12) The light amplification device according to any one of supplementary notes 3 to 7, wherein the connection means connects the plurality of amplification cores of the multi-core optical amplification means selected according to the operation mode and the plurality of transmission path cores to each other.

(Supplementary note 13) The light amplification device according to supplementary note 12, wherein the connection means includes: a third fan-in/fan-out means for connecting the plurality of transmission path cores and a single-core optical transmission path; and a fourth fan-in/fan-out means for connecting the single-core optical transmission path and the plurality of amplification cores.

(Supplementary note 14) The light amplification device according to any one of supplementary notes 1 to 13, wherein each of the plurality of amplification cores contains rare-earth ions, and the multi-core optical amplification means includes a double clad structure.

(Supplementary note 15) The light amplification device according to any one of supplementary notes 3 to 14, further including an excitation light introduction means for introducing excitation light into the multi-core optical amplification means by a clad excitation method, the excitation light exciting the plurality of amplification cores, wherein the excitation light introduction means includes: an excitation light generation means for generating the excitation light; a

**EP 4 432 488 A1**

variable splitting means for splitting the excitation light and supplying the split excitation light to the multi-core optical amplification means; and an excitation light control means for determining a splitting ratio of the variable splitting means according to the operation mode and setting the determined splitting ratio to the variable splitting means.

(Supplementary note 16) The light amplification device according to supplementary note 15, wherein the excitation light generation means includes: a plurality of light sources configured to generate laser light; and a multiplexing means for multiplexing the laser light generated by the plurality of light sources and transmitting the excitation light.

(Supplementary note 17) A light amplification method including: connecting a multi-core optical amplifier including a plurality of amplification cores and a multi-core optical transmission path including a plurality of transmission path cores in such a way that a total number of the plurality of amplification cores is equal to or greater than the number of transmission cores through which signal light propagates, among the plurality of transmission path cores; and amplifying the signal light by the plurality of amplification cores.

(Supplementary note 18) The light amplification method according to supplementary note 17, wherein the connecting the multi-core optical amplifier and the multi-core optical transmission path includes connecting the multi-core optical amplifier and the multi-core optical transmission path according to an operation mode of an entirety of the multi-core optical amplifier.

(Supplementary note 19) The light amplification method according to supplementary note 18, wherein, when the operation mode is a mode for minimizing power consumption, the connecting the multi-core optical amplifier and the multi-core optical transmission path includes connecting the multi-core optical amplifier and the multi-core optical transmission path in a connection form in which a total of excitation light intensity for each of the multi-core optical amplifier is minimized.

(Supplementary note 20) The light amplification method according to supplementary note 19, wherein the excitation light intensity is determined by a configuration of the multi-core optical amplifier, the configuration including the number of the plurality of amplification cores.

(Supplementary note 21) The light amplification method according to supplementary note 18, wherein, when the operation mode is a mode for maximizing an optical amplification degree, the connecting the multi-core optical amplifier and the multi-core optical transmission path includes connecting the multi-core optical amplifier and the multi-core optical transmission path in a connection form in which a total of excitation density for each of the multi-core optical amplifier is maximized.

(Supplementary note 22) The light amplification method according to supplementary note 21, wherein the excitation density is determined by a configuration of the multi-core optical amplifier, the configuration including the number of the plurality of amplification cores.

(Supplementary note 23) The light amplification method according to any one of supplementary notes 18 to 22, wherein the connecting the multi-core optical amplifier and the multi-core optical transmission path includes switching connection between the plurality of amplification cores and the plurality of transmission path cores according to the operation mode.

(Supplementary note 24) The light amplification method according to any one of supplementary notes 19 to 22, further including: determining the connection form according to the operation mode by using the number of the transmission cores and information relating to a configuration of the multi-core optical amplifier.

(Supplementary note 25) The light amplification method according to any one of supplementary notes 18 to 22, further including: selecting the multi-core optical amplifier according to the operation mode by using the number of the transmission cores and information relating to a configuration of the multi-core optical amplifier.

(Supplementary note 26) The light amplification method according to supplementary note 25, wherein the connecting the multi-core optical amplifier and the multi-core optical transmission path includes connecting the plurality of amplification cores of the multi-core optical amplifier and the plurality of transmission path cores to each other, the plurality of amplification cores being selected according to the operation mode.

(Supplementary note 27) The light amplification method according to any one of supplementary notes 18 to 26, wherein the amplifying the signal light includes: generating excitation light exciting the plurality of amplification cores; splitting the excitation light at a splitting ratio according to the operation mode; and introducing the split excitation light into the multi-core optical amplifier by a clad excitation method.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

**Reference Signs List**

**EP 4 432 488 A1**

100, 1000, 2000 Light amplification device
110, 1100, 1101 to 1104 Multi-core optical amplification unit
120, 1200, 2200 Connection unit
1210, 2210 First connection unit
1211, 1221 First fan-in/fan-out unit
1212, 1222 Optical switching unit
1213, 1223 Second fan-in/fan-out unit
1220, 2220 Second connection unit
1300 Excitation light generation unit
1310 Light source
1320 Multiplexing unit
1330 Driver
1400 Variable splitting unit
1410 Combiner
1500, 2500 Control unit
2211, 2221 Third fan-in/fan-out unit
2212, 2222 Single-core optical transmission path
2213, 2223 Fourth fan-in/fan-out unit
10, 11, 12 Multi-core optical transmission path

**Claims**

1. A light amplification device comprising:

   multi-core optical amplification means including a plurality of amplification cores; and
   connection means for connecting the multi-core optical amplification means and a multi-core optical transmission path including a plurality of transmission path cores, wherein
   a total number of the plurality of amplification cores is equal to or greater than a number of transmission cores through which signal light propagates, among the plurality of transmission path cores.

2. The light amplification device according to claim 1, wherein
   the multi-core optical amplification means includes a plurality of the multi-core optical amplification means provided with different numbers of the plurality of amplification cores.

3. The light amplification device according to claim 1 or 2, wherein
   the connection means connects the multi-core optical amplification means and the multi-core optical transmission path according to an operation mode of the light amplification device.

4. The light amplification device according to claim 3, wherein,
   when the operation mode is a mode for minimizing power consumption, the connection means connects the multi-core optical amplification means and the multi-core optical transmission path in a connection form in which a total of excitation light intensity for each of the multi-core optical amplification means is minimized.

5. The light amplification device according to claim 4, wherein
   the excitation light intensity is determined by a configuration of the multi-core optical amplification means, the configuration including a number of the plurality of amplification cores.

6. The light amplification device according to claim 3, wherein,
   when the operation mode is a mode for maximizing an optical amplification degree, the connection means connects the multi-core optical amplification means and the multi-core optical transmission path in a connection form in which a total of excitation density for each of the multi-core optical amplification means is maximized.

7. The light amplification device according to claim 6, wherein
   the excitation density is determined by a configuration of the multi-core optical amplification means, the configuration including a number of the plurality of amplification cores.

8. The light amplification device according to any one of claims 4 to 7, wherein

the connection means switches connection between the plurality of amplification cores and the plurality of transmission path cores according to the operation mode.

9. The light amplification device according to claim 8, wherein
the connection means includes:

first fan-in/fan-out means for connecting the plurality of transmission path cores and a first single-core optical transmission path;
optical switching means for switching connection between the first single-core optical transmission path and a second single-core optical transmission path; and
second fan-in/fan-out means for connecting the second single-core optical transmission path and the plurality of amplification cores.

10. The light amplification device according to any one of claims 4 to 9, further comprising
connection form determination means for determining the connection form according to the operation mode, by using a number of the transmission cores and information relating to a configuration of the multi-core optical amplification means.

11. The light amplification device according to any one of claims 4 to 9, further comprising:
connection form reception means for receiving information relating to the connection form according to the operation mode.

12. The light amplification device according to any one of claims 3 to 7, wherein
the connection means connects the plurality of amplification cores of the multi-core optical amplification means selected according to the operation mode and the plurality of transmission path cores to each other.

13. The light amplification device according to claim 12, wherein
the connection means includes:

third fan-in/fan-out means for connecting the plurality of transmission path cores and a single-core optical transmission path; and
fourth fan-in/fan-out means for connecting the single-core optical transmission path and the plurality of amplification cores.

14. The light amplification device according to any one of claims 1 to 13, wherein

each of the plurality of amplification cores contains rare-earth ions, and
the multi-core optical amplification means includes a double clad structure.

15. The light amplification device according to any one of claims 3 to 13, further comprising

excitation light introduction means for introducing excitation light into the multi-core optical amplification means by a clad excitation method, the excitation light exciting the plurality of amplification cores, wherein
the excitation light introduction means includes:

excitation light generation means for generating the excitation light;
variable splitting means for splitting the excitation light and supplying the split excitation light to the multi-core optical amplification means; and
excitation light control means for determining a splitting ratio of the variable splitting means according to the operation mode, and setting the determined splitting ratio to the variable splitting means.

16. The light amplification device according to claim 15, wherein
the excitation light generation means includes:

a plurality of light sources configured to generate laser light; and
multiplexing means for multiplexing the laser light generated by the plurality of light sources and transmitting the excitation light.

**17.** A light amplification method comprising:

connecting a multi-core optical amplifier including a plurality of amplification cores and a multi-core optical transmission path including a plurality of transmission path cores in such a way that a total number of the plurality of amplification cores is equal to or greater than a number of transmission cores through which signal light propagates, among the plurality of transmission path cores; and
amplifying the signal light by the plurality of amplification cores.

**18.** The light amplification method according to claim 17, wherein
the connecting the multi-core optical amplifier and the multi-core optical transmission path includes connecting the multi-core optical amplifier and the multi-core optical transmission path according to an operation mode of an entirety of the multi-core optical amplifier.

**19.** The light amplification method according to claim 18, wherein,
when the operation mode is a mode for minimizing power consumption, the connecting the multi-core optical amplifier and the multi-core optical transmission path includes connecting the multi-core optical amplifier and the multi-core optical transmission path in a connection form in which a total of excitation light intensity for each of the multi-core optical amplifier is minimized.

**20.** The light amplification method according to claim 19, wherein
the excitation light intensity is determined by a configuration of the multi-core optical amplifier, the configuration including a number of the plurality of amplification cores.

**21.** The light amplification method according to claim 18, wherein,
when the operation mode is a mode for maximizing an optical amplification degree, the connecting the multi-core optical amplifier and the multi-core optical transmission path includes connecting the multi-core optical amplifier and the multi-core optical transmission path in a connection form in which a total of excitation density for each of the multi-core optical amplifier is maximized.

**22.** The light amplification method according to claim 21, wherein
the excitation density is determined by a configuration of the multi-core optical amplifier, the configuration including a number of the plurality of amplification cores.

**23.** The light amplification method according to any one of claims 18 to 22, wherein
the connecting the multi-core optical amplifier and the multi-core optical transmission path includes switching connection between the plurality of amplification cores and the plurality of transmission path cores according to the operation mode.

**24.** The light amplification method according to any one of claims 19 to 22, further comprising
determining the connection form according to the operation mode by using a number of the transmission cores and information relating to a configuration of the multi-core optical amplifier.

**25.** The light amplification method according to any one of claims 18 to 22, further comprising
selecting the multi-core optical amplifier according to the operation mode by using a number of the transmission cores and information relating to a configuration of the multi-core optical amplifier.

**26.** The light amplification method according to claim 25, wherein
the connecting the multi-core optical amplifier and the multi-core optical transmission path includes connecting the plurality of amplification cores of the multi-core optical amplifier and the plurality of transmission path cores to each other, the plurality of amplification cores being selected according to the operation mode.

**27.** The light amplification method according to any one of claims 18 to 26, wherein
the amplifying the signal light includes:

generating excitation light exciting the plurality of amplification cores;
splitting the excitation light at a splitting ratio according to the operation mode; and

introducing the split excitation light into the multi-core optical amplifier by a clad excitation method.

Fig.1

100

120

10

110

Fig.2

START

↓

CONNECT MULTI-CORE OPTICAL
AMPLIFIER AND MULTI-CORE OPTICAL
TRANSMISSION PATH TO EACH OTHER
$\sum (m_k \times N_k) \geqq n$ — S11

↓

AMPLIFY SIGNAL LIGHT — S12

↓

END

EP 4 432 488 A1

Fig.3

# Fig.4

EP 4 432 488 A1

## Fig.5

| NUMBER OF CORES | EXCITATION DENSITY RATIO $\eta$ | LIGHT INTENSITY [W/core] REQUIRED FOR GENERATING EXCITATION STATE | REQUIRED EXCITATION LIGHT INTENSITY P[W] |
|---|---|---|---|
| 2 | 1 | 1 | 1 |
| 4 | 2 | 0.5 | 2 |
| 7 | 3 | 0.3 | 2.1 |
| 19 | 3.8 | 0.26 | 5 |

EP 4 432 488 A1

# Fig.6

START

DETERMINE CONNECTION FORM
ACCORDING TO OPERATION MODE — S21

CONNECT MULTI-CORE OPTICAL
AMPLIFIER AND MULTI-CORE OPTICAL
TRANSMISSION PATH TO EACH OTHER
$\sum (m_k \times N_k) \geqq n$ — S11

AMPLIFY SIGNAL LIGHT — S12

END

Fig.7

# Fig.8

START

SELECT MULTI-CORE OPTICAL AMPLIFIER ACCORDING TO OPERATION MODE — S31

CONNECT MULTI-CORE OPTICAL AMPLIFIER AND MULTI-CORE OPTICAL TRANSMISSION PATH TO EACH OTHER
$$\sum (m_k \times N_k) \geqq n$$
— S11

AMPLIFY SIGNAL LIGHT — S12

END

国際調査報告

| 国際出願番号 |
|---|
| PCT/JP2021/041581 |

A. 発明の属する分野の分類（国際特許分類（ＩＰＣ））

H01S 3/10(2006.01)i
FI: H01S3/10 D

B. 調査を行った分野

調査を行った最小限資料（国際特許分類（ＩＰＣ））

H01S3/10, G02B6/02

最小限資料以外の資料で調査を行った分野に含まれるもの

日本国実用新案公報　　　　　１９２２－１９９６年
日本国公開実用新案公報　　　１９７１－２０２１年
日本国実用新案登録公報　　　１９９６－２０２１年
日本国登録実用新案公報　　　１９９４－２０２１年

国際調査で使用した電子データベース（データベースの名称、調査に使用した用語）

C. 関連すると認められる文献

| 引用文献の カテゴリー* | 引用文献名　及び一部の箇所が関連するときは、その関連する箇所の表示 | 関連する 請求項の番号 |
|---|---|---|
| X | JP 2019-75450 A（住友電気工業株式会社）16.05.2019（2019 - 05 - 16） 段落0024-0035,図1-4 | 1,17 |
| Y | | 2,14 |
| A | | 3-13,15-16,18-27 |
| Y | JP 2020-9999 A（日本電信電話株式会社）16.01.2020（2020 - 01 - 16） 段落0064,図14 | 2,14 |
| Y | JP 2018-198287 A（日本電信電話株式会社）13.12.2018（2018 - 12 - 13） 段落0019,図1 | 14 |
| X | WO 2020/137820 A1（日本電気株式会社）02.07.2020（2020 - 07 - 02） 段落0032-0044,図2 | 1,17 |
| Y | | 2,14 |
| A | | 3-13,15-16,18-27 |
| A | WO 2017/090598 A1（日本電信電話株式会社）01.06.2017（2017 - 06 - 01） 全文全図 | 1-27 |

☑ C欄の続きにも文献が列挙されている。　　　　☑ パテントファミリーに関する別紙を参照。

\* 引用文献のカテゴリー
"A" 特に関連のある文献ではなく、一般的技術水準を示すもの
"E" 国際出願日前の出願または特許であるが、国際出願日以後に公表されたもの
"L" 優先権主張に疑義を提起する文献又は他の文献の発行日若しくは他の特別な理由を確立するために引用する文献（理由を付す）
"O" 口頭による開示、使用、展示等に言及する文献
"P" 国際出願日前で、かつ優先権の主張の基礎となる出願の日の後に公表された文献

"T" 国際出願日又は優先日後に公表された文献であって出願と抵触するものではなく、発明の原理又は理論の理解のために引用するもの
"X" 特に関連のある文献であって、当該文献のみで発明の新規性又は進歩性がないと考えられるもの
"Y" 特に関連のある文献であって、当該文献と他の１以上の文献との、当業者にとって自明である組合せによって進歩性がないと考えられるもの
"&" 同一パテントファミリー文献

| 国際調査を完了した日 | 国際調査報告の発送日 |
|---|---|
| 08.12.2021 | 21.12.2021 |

| 名称及びあて先 | 権限のある職員（特許庁審査官） |
|---|---|
| 日本国特許庁(ISA/JP) 〒100-8915 日本国 東京都千代田区霞が関三丁目４番３号 | 小澤　尚由 2K 5065 電話番号 03-3581-1101 内線 3255 |

様式 PCT/ISA/210（第２ページ）（２０１５年１月）

国際調査報告

| 国際出願番号 |
| --- |
| PCT/JP2021/041581 |

| C. 関連すると認められる文献 | | |
| --- | --- | --- |
| 引用文献の<br>カテゴリー* | 引用文献名　及び一部の箇所が関連するときは、その関連する箇所の表示 | 関連する<br>請求項の番号 |
| A | WO 2020/171103 A1 (日本電気株式会社) 27.08.2020 (2020-08-27)<br>全文全図 | 1-27 |
| A | US 2011/0134943 A1 (IMRA AMERICA, INC.) 09.06.2011 (2011-06-09)<br>全文全図 | 1-27 |

様式 PCT/ISA/210 (第2ページ) (2015年1月)

| 国際調査報告 パテントファミリーに関する情報 | | 国際出願番号 PCT/JP2021/041581 | |

| 引用文献 | 公表日 | パテントファミリー文献 | 公表日 |
|---|---|---|---|
| JP 2019-75450 A | 16.05.2019 | US 2019/0115715 A1 段落0027-0044,図1-4 GB 2569216 A FR 3072511 A1 CN 109672074 A | |
| JP 2020-9999 A | 16.01.2020 | WO 2020/013096 A1 段落0064,図14 | |
| JP 2018-198287 A | 13.12.2018 | （ファミリーなし） | |
| WO 2020/137820 A1 | 02.07.2020 | （ファミリーなし） | |
| WO 2017/090598 A1 | 01.06.2017 | US 2018/0358773 A1 全文全図 EP 3364569 A1 CN 108292957 A | |
| WO 2020/171103 A1 | 27.08.2020 | （ファミリーなし） | |
| US 2011/0134943 A1 | 09.06.2011 | US 2007/0086713 A1 全文全図 | |

**EP 4 432 488 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017021070 A
- JP 2019139029 A